# EUROPEAN PATENT SPECIFICATION

(11) **EP 3 432 431 B1**
(45) Date of publication and mention of the grant of the patent: **24.02.2021**
(21) Application number: 18181079.7
(22) Date of filing: 02.07.2018
(51) Int. Cl.: H02B 13/025

(54) **SWITCHGEAR HOUSING WITH ARC CAPTURING**
SCHALTANLAGENGEHÄUSE MIT LICHTBOGEN AUFFANG
BOÎTIER D'APPAREILLAGE DE COMMUTATION AVEC CAPTURE D'ARC

(30) Priority: 19.07.2017 IN 201711025655; 14.11.2017 GB 201718759
(43) Date of publication of application: 23.01.2019
(73) Proprietor: Eaton Intelligent Power Limited, Dublin 4 (IE)
(72) Inventor: GATTRINGER, Thomas, 3943 Schrems (AT); NAIR, Arun, 93047 Regensburg (DE)
(74) Representative: Eaton IP Group EMEA

(56) References cited:
- EP-A1- 3 002 838
- DE-B- 1 191 458

## Description

The invention relates to switchgear housing comprising:
- an enclosure with a back panel;
- at least two busbars extending substantially parallel to each other through the enclosure, wherein each busbar has a first end for connection with a power supply;
- a first length of each busbar proximal to the first end is exposed;
- a second length of each busbar distal from the first end is covered with an insulation;
- branched off sub-busbars arranged around an end of the first length of the busbars and adjacent to the second length of the busbars.

Such a switchgear housing is for example known from EP 3002838, DE 11 91 458 B and EP 3 003 838 A1. EP 3002838 discloses a housing through which busbars extend from bottom to top. Switchgear, such as for example a switch, is mounted in the housing and connected to the busbars. Downstream of the power source, which is connected to the bottom side of the bus bars, and beyond the switchgear an arc extinguishing device is arranged.

Arcs usually ignite on cable terminations, bolted connections or terminals of devices. These arcs occur due to for example misoperation, faulty installation, faulty assembly, pest ingress or corrosion. These arcs then have the tendency to propagate along the busbars in a direction away from the power source.

Typically, a number of safety measurements are in place to extinguish the occurring arc as soon as possible, such as with the arc extinguishing device of EP 3002838. However, in some cases, even the safety measurements fail and the occurring arc continues to burn. This provides considerable danger for the operator, because a continuing arc could cause a pressure rise in the housing, as well as a strong temperature rise.

Accordingly, it is an object of the invention to reduce or even remove the above-mentioned disadvantages.

This object is achieved with a switchgear housing according to the preamble, which is characterized in that
- a capturing enclosure arranged around the branched off sub-busbars, wherein the capturing enclosure comprises a venting opening which connect to openings in the back panel of the enclosure, the openings being covered by at least one venting flap, which is urged open upon an overpressure in the capturing enclosure.

With the housing according to the invention, the first length of exposed busbar can be used to mount switchgear to for supplying the switchgear with power from the busbars. When an arc occurs, the arc will propagate along the exposed busbars away from the power source and towards the second lengths of busbar, which are insulated. Because the second lengths of busbar are insulated, the arc cannot proceed further and will be captured in the capturing enclosure.

Because the burning arc is enclosed and captured in the capturing enclosure, any overpressure or heat can be vented via the openings arranged in the capturing enclosure.

As with the invention the location of the burning arc is defined, any hazards for operators can more easily be reduced.

In a preferred embodiment of the switchgear housing according to the invention, the venting opening of the capturing enclosure connects to an opening in the enclosure of the switchgear housing, and the at least one venting flap is arranged on the outside of the enclosure of the switchgear housing.

Due to the connection of the venting opening of the capturing enclosure to the opening in the enclosure of the switchgear housing, it is ensured that any overpressure and heat is vented to outside of the switchgear, such that all hazardous elements are guided out of the housing and cannot be rerouted inside the switchgear housing to positions, which could be potentially dangerous for the operator.

In yet another embodiment of the switchgear housing according to the invention the at least two busbars extend through passage openings in the walls of the capturing enclosure and the passage openings are sealed.

Due to the sealing of the passage openings and the venting flap connections designed as first to break, any overpressure must exit the capturing enclosure via the venting opening.

In a further preferred embodiment of the switchgear housing according to the invention an arc beam is arranged inside of the capturing enclosure and to one of the busbars and wherein the arc beam extends over the remaining busbars.

The arc beam is connected to one of the busbars and extends over the remaining busbars, such that the arc can burn between one of the remaining busbars and the arc beam. This allows one to further optimize the position, where the arc will burn.

Preferably, the clearance between the arc beam and the remaining busbars is smaller than the clearance between the busbars. This will ensure that the arc propagating into the capturing enclosure will burn between one of the remaining busbars and the arc beam. Furthermore, the dimensions of the arc beam can be designed to withstand any prolonged burning of the arc, without substantially damaging the arc beam. If the arc would be damaged, it could lead to an unpredictable position of the burning arc.

In a very preferred embodiment of the switchgear housing according to the invention, the first lengths of busbars comprise each branched off sub-busbars mounted to the first lengths of the busbars and extending parallel to the second lengths of the busbars and wherein the capturing enclosure is arranged around the branched off sub-busbars.

With the branched off sub-busbars, it is possible to exchange the capturing enclosure, without having to unmount the remaining busbars.

These and other features of the invention will be elucidated in conjunction with the accompanying drawings.
Figure 1 shows a perspective view of an embodiment of a switchgear housing according to the invention.
Figure 2 shows a schematic cross-sectional view over the capturing enclosure of the switchgear housing according to figure 1.
Figure 3 shows a perspective view of the branched off sub-busbars of the capturing enclosure of the switchgear housing.

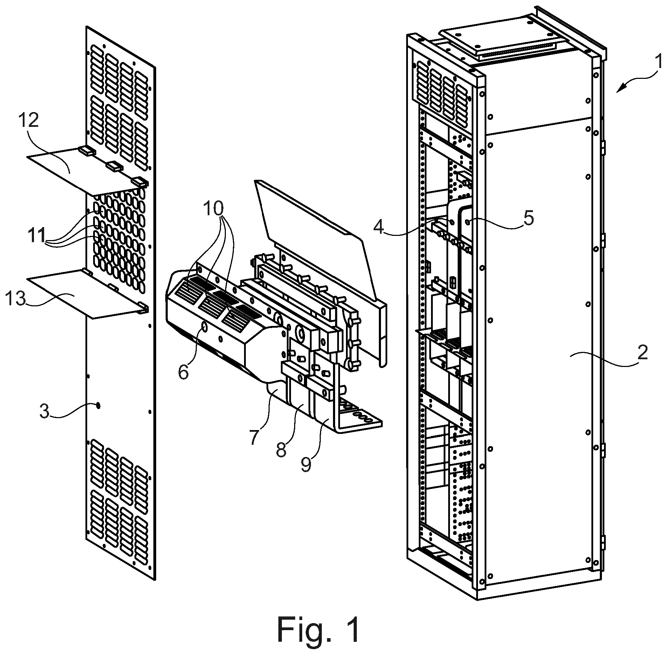

Figure 1 shows a switchgear housing 1 according to the invention with an enclosure 2. The back panel 3 of the enclosure 2 has been shown removed. The enclosure 2 encloses busbars 4, 5 to which switchgear (not shown) can be mounted.

An opened up capturing enclosure 6 is shown, in which branched off sub-busbars 7, 8, 9 extend. The capturing enclosure 6 has venting openings 10, which connect to opening 11 in the back panel 3 of the enclosure. These openings 11 are typically closed by flaps 12, 13.

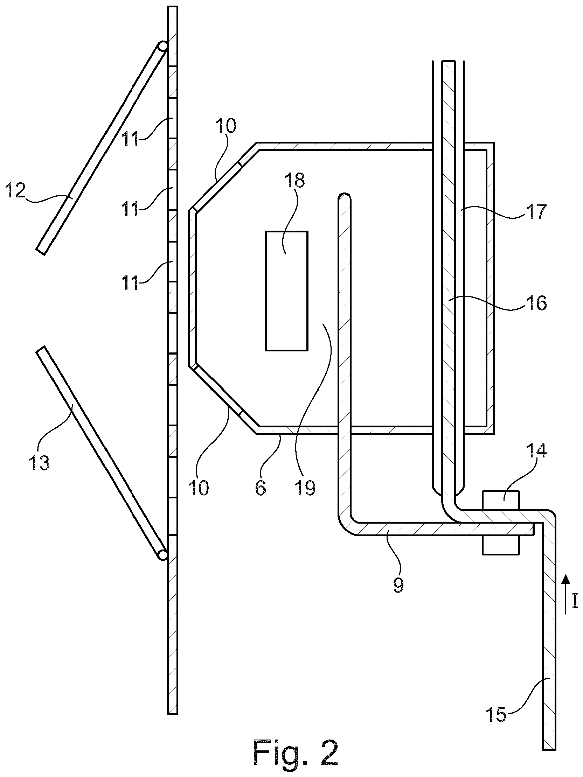

Figure 2 shows a schematic cross-sectional view. The branched off sub-busbar 9 is mounted by bolts 14 to a first length of busbar 15, which is exposed. Downstream in view of the current direction I, a second length of busbar 16 is provided, which is covered by an insulation layer 17.

The branched off sub-busbar 9 extends parallel to this second length of busbar 16, such that an arc propagating in direction of the current and hindered by the insulation layer 17, will move along the branched off sub-busbar 9 into the capturing enclosure 6.

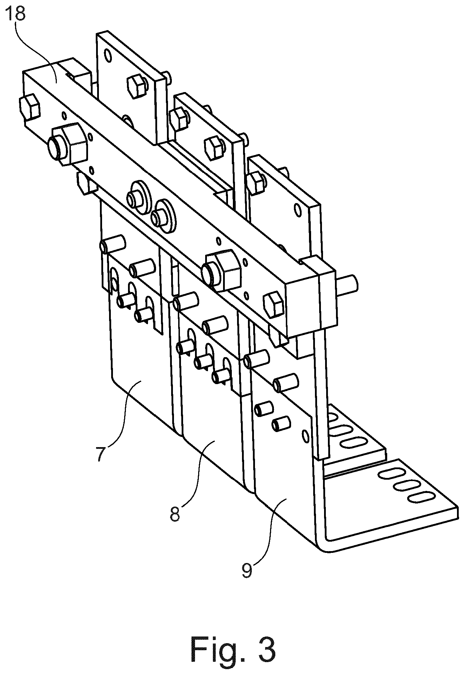

As shown in more detail in figure 3, the center branched off sub-busbar 8 has an arc beam 18 extending in the horizontal direction along the remaining sub-busbars 7, 9. As a result, a small spark gap 19 is formed between the sub-busbar 9 and the arc beam 18, such that the propagating arc will move to this spark gap 19.

Because the spark gap 19 is fully enclosed by the capturing enclosure 6 any overpressure and heat caused by the arc can be vented via the venting openings 10, which connect to the opening 11 in the back panel 3. The overpressure will force the flaps 12, 13 to swivel open allowing for the overpressure to be relieved and any heat to be vented to the outside of the switchgear housing 1.

## Claims

1. Switchgear housing (1) comprising:
- an enclosure (2) with a back panel (3);
- at least two busbars (4,5) extending substantially parallel to each other through the enclosure (2), wherein each busbar (4,5) has a first end for connection with a power supply;
- a first length (15) of each busbar proximal to the first end is exposed;
- a second length (16) of each busbar distal from the first end is covered with an insulation;
- branched off sub-busbars (7,8,9) arranged around an end of the first length (15) of the busbars and adjacent to the second length (16) of the busbars;
**characterized in that**
- a capturing enclosure (6) arranged around the branched off sub-busbars (7,8,9), wherein the capturing enclosure comprises a venting opening (10), which connect to openings (11) in the back panel (3) of the enclosure (2), the openings (11) being covered by at least one venting flap (12, 13), which is urged open upon an overpressure in the capturing enclosure (6).

2. Switchgear housing according to claim 1, wherein the at least one venting flap is arranged on the outside of the enclosure (2) of the switchgear housing (1).

3. Switchgear housing according to claim 1 or 2,
wherein the at least two busbars (4,5) extend through passage openings in the walls of the capturing enclosure (6) and wherein the passage openings are sealed.

4. Switchgear housing according to any of the preceding claims, wherein an arc beam (18) is arranged inside of the capturing enclosure (6) and connected to one of the branched off sub-busbars (8) and wherein the arc beam extends over the remaining branched off sub-busbars (7,9).

5. Switchgear housing according to claim 4, wherein the clearance between the arc beam and the remaining branched off sub-busbars (7,9) is smaller than the clearance between the branched off sub-busbars (7,8,9).

## Patentansprüche

1. Schaltanlagengehäuse (1), umfassend:
- eine Einschließung (2) mit einer Rückwand (3);
- mindestens zwei Stromschienen (4, 5), die sich im Wesentlichen parallel zueinander durch die Einschließung (2) erstrecken, wobei jede Stromschiene (4, 5) ein erstes Ende für die Verbindung mit einer Stromversorgung aufweist;
- wobei eine erste Länge (15) von jeder Stromschiene proximal zu dem ersten Ende blank liegt;
- wobei eine zweite Länge (16) von jeder Stromschiene distal von dem ersten Ende mit einer Isolierung abgedeckt ist;
- wobei abgezweigte Unterstromschienen (7, 8, 9) um ein Ende der ersten Länge (15) der Stromschienen und angrenzend zu der zweiten Länge (16) der Stromschienen angeordnet sind;
**dadurch gekennzeichnet, dass**
- eine erfassende Einschließung (6) um die abgezweigten Unterstromschienen (7, 8, 9) angeordnet ist, wobei die erfassende Einschließung eine Belüftungsöffnung (10) umfasst, die mit den Öffnungen (11) in der Rückwand (3) der Einschließung (2) verbindet, wobei die Öffnungen (11) durch mindestens eine Belüftungsklappe (12, 13) abgedeckt ist, die bei Überdruck in der erfassenden Einschließung (6) in geöffnet gedrängt wird.

2. Schaltanlagengehäuse nach Anspruch 1, wobei die mindestens eine Belüftungsklappe an der Außenseite der Einschließung (2) des Schaltanlagengehäuses (1) angeordnet ist.

3. Schaltanlagengehäuse nach Anspruch 1 oder 2, wobei sich die mindestens zwei Stromschienen (4, 5) durch Durchgangsöffnungen in den Wänden der erfassenden Einschließung (6) erstrecken und wobei die Durchgangsöffnungen versiegelt sind.

4. Schaltanlagengehäuse nach einem der vorstehenden Ansprüche, wobei ein Bogenstrahl (18) innerhalb der erfassenden Einschließung (6) angeordnet ist und mit einer der abgezweigten Unterstromschienen (8) verbunden ist, und wobei sich der Bogenstrahl über die verbleibenden abgezweigten Unterstromschienen (7, 9) erstreckt.

5. Schaltanlagengehäuse nach Anspruch 4, wobei der Abstand zwischen dem Bogenstrahl und den verbleibenden abgezweigten Unterstromschienen (7, 9) kleiner ist als der Abstand zwischen den abgezweigten Unterstromschienen (7, 8, 9).

## Revendications

1. Boîtier d'appareillage de commutation (1) comprenant :
- une enceinte (2) avec un panneau arrière (3) ;
- au moins deux barres omnibus (4, 5) s'étendant sensiblement parallèlement les unes aux autres à travers l'enceinte (2), dans lequel chaque barre omnibus (4, 5) présente une première extrémité pour un raccordement avec une alimentation électrique ;
- une première longueur (15) de chaque barre omnibus proximale à la première extrémité est exposée ;
- une seconde longueur (16) de chaque barre omnibus distale depuis la première extrémité est recouverte par une isolation ;
- des sous-barres omnibus séparées (7, 8, 9) agencées autour d'une extrémité de la première longueur (15) des barres omnibus et adjacentes à la seconde longueur (16) des barres omnibus ;
**caractérisé en ce que**
- une enceinte de capture (6) agencée autour des sous-barres omnibus séparées (7, 8, 9), dans lequel l'enceinte de capture comprend une ouverture de ventilation (10), qui se raccorde à des ouvertures (11) dans le panneau arrière (3) de l'enceinte (2), les ouvertures (11) étant recouvertes par au moins un volet de ventilation (12, 13), qui est forcé à l'état ouvert lors d'une surpression dans l'enceinte de capture (6).

2. Boîtier d'appareillage de commutation selon la revendication 1, dans lequel le au moins un volet de ventilation est agencé sur l'extérieur de l'enceinte (2) du boîtier d'appareillage de commutation (1).

3. Boîtier d'appareillage de commutation selon la revendication 1 ou 2, dans lequel les au moins deux barres omnibus (4, 5) s'étendent à travers des ouvertures de passage dans les parois de l'enceinte de capture (6) et dans lequel les ouvertures de passage sont fermées hermétiquement.

4. Boîtier d'appareillage de commutation selon l'une quelconque des revendications précédentes, dans lequel un faisceau en arc (18) est agencé à l'intérieur de l'enceinte de capture (6) et raccordé à une des sous-barres omnibus séparées (8) et dans lequel le faisceau en arc s'étend sur les sous-barres séparées restantes (7, 9).

5. Boîtier d'appareillage de commutation selon la revendication 4, dans lequel l'espace entre le faisceau en arc et les sous-barres omnibus séparées restantes (7, 9) est plus petit que l'espace entre les sous-barres omnibus séparées (7, 8, 9).
